# EUROPEAN PATENT APPLICATION

(11) **EP 4 328 802 A1**
(43) Date of publication of application: **28.02.2024**
(21) Application number: 23186330.9
(22) Date of filing: 19.07.2023
(51) Int. Cl.: G06N 3/063, G06N 3/0464, G06N 3/048, G06N 3/09

(54) **DEEP NEURAL NETWORK (DNN) ACCELERATORS WITH HETEROGENEOUS TILING**

(30) Priority: 19.08.2022 US 202217820900
(71) Applicant: INTEL Corporation, Santa Clara, CA 95054 (US)
(72) Inventor: RAHA, Arnab, San Jose, 95136 (US); CHEEMA, Umer Iftikhar, Hillsboro, 97124 (US); GUPTA, Praveen Kumar, Hillsboro, 97124 (US); MATHAIKUTTY, Deepak Abraham, Chandler, 85224 (US); SUNG, Raymond Jit-Hung, San Francisco, 94158 (US)
(74) Representative: Rummler, Felix

(57) **Abstract**

An DNN accelerator includes one or more heterogenous tile sets. A heterogenous tile set includes tiles of different sizes, e.g., PE arrays including different numbers of columns or rows. The DNN accelerator may identify a tile set from the tile sets for running a DNN model based on dimensions of output tensors convolutional layers in the DNN. Within the selected tile set, a tile may be selected for a convolutional layer in the DNN, e.g., based on dimensions of the output tensor of the convolutional layer and the size of the tile. After the tile is selected, the workload for running a convolutional operation of the layer may be partitioned and assigned to individual PEs in the tile by partitioning the output tensor into output tensor segments. The workload of computing an individual output tensor segment can be assigned to an individual PE in the tile.

## Description

### Technical Field

This disclosure relates generally to neural networks, and more specifically, to DNN accelerators with heterogeneous tiling.

### Background

DNNs are used extensively for a variety of artificial intelligence applications ranging from computer vision to speech recognition and natural language processing due to their ability to achieve high accuracy. However, the high accuracy comes at the expense of significant computation cost. DNNs have extremely high computing demands as each inference can require hundreds of millions of MAC (multiply-accumulate) operations as well as hundreds of millions of weight operand weights to be stored for classification or detection. Therefore, techniques to improve efficiency of DNNs are needed.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an example DNN, in accordance with various embodiments.
FIG. 2 is a block diagram of an example DNN accelerator, in accordance with various embodiments.
FIG. 3 is a block diagram of a tile set, in accordance with various embodiments.
FIG. 4 illustrates a processing element (PE) array, in accordance with various embodiments.
FIG. 5 is a block diagram of a PE, in accordance with various embodiments.
FIG. 6 illustrates an integer MAC operation by a PE, in accordance with various embodiments.
FIG. 7 illustrates a floating-point MAC operation by a PE, in accordance with various embodiments.
FIG. 8 illustrates partitioning of a convolution workload to be operated by a PE array, in accordance with various embodiments.
FIG. 9 illustrates an example homogeneous tile set, in accordance with various embodiments.
FIGs. 10A-10C illustrate example heterogeneous tile sets, in accordance with various embodiments.
FIG. 11 is a flowchart showing a method of deep learning, in accordance with various embodiments.
FIG. 12 illustrates a deep learning environment, in accordance with various embodiments.
FIG. 13 is a block diagram of an example DNN system, in accordance with various embodiments.
FIG. 14 is a block diagram of an example computing device, in accordance with various embodiments.

### Detailed Description

### Overview

The last decade has witnessed a rapid rise in Al (artificial intelligence) based data processing, particularly based on DNN. DNNs are widely used in the domains of computer vision, speech recognition, image, and video processing mainly due to their ability to achieve beyond human-level accuracy. The significant improvements in DNN model size and accuracy coupled with the rapid increase in computing power of execution platforms have led to the adoption of DNN applications even within resource constrained mobile and edge devices that have limited energy availability. However, to extend the lifetime of these edge devices these platforms usually leverage DNN accelerators as the execution platform that are optimized for high performance and low power consumption for DNN workloads. However, DNNs come in a variety of shape and sizes, and the main challenge for these DNN accelerators is to ensure high MAC utilization and efficiency across this myriad of DNN workloads that will result in highest throughput and the lowest energy consumption for these resource constrained platforms.

A DNN accelerator is typically organized in the form of an array of PEs, where each PE consists of one or more of MAC units. An array of PEs may form one tile in a DNN accelerator. Multiple tiles are usually required to meet the top requirement as well as to schedule and map multiple layers of the same or different networks on each of the tiles.

Conventional DNN accelerators are made up of multiple tiles of the same size (for example, 16x16 PEs). These DNN accelerators typically have PE arrays, in which the number of rows and the number of columns are multiples of 16. These in the form of rows and columns that are almost always a multiple of 16 often rely on the compiler to maximize the PE utilization, i.e., to minimize unused PEs. However, there is a maximum limit till which the compiler can improve the utilization without changing the tile dimension. With a fixed tile size, compiler support provides limited improvements in utilization across a variety of DNN workloads that come in different shapes and sizes. Even with techniques such as workload splitting or workload tiling, it is difficult to improve the utilization significantly.

Clock gating or power gating of unused PEs have also been explored as means of reducing the power consumption for underutilized PE arrays. Clock gating and power gating require circuit additions leading to area, power, and performance overheads. Some solutions choose to apply clock gates without power gating to the unutilized PEs. However, such solutions can result in less energy savings compared to clock gating due to the presence of leakage. Therefore, improvement technology for improving PE utilization in DNN accelerators is needed.

Embodiments of the present disclosure may improve on at least some of the challenges and issues described above by providing an DNN accelerator that includes an ensemble of heterogeneous tiles to improve the utilization of PEs in the DNN accelerator for various DNN workloads. Heterogeneous tiles are tiles having different sizes. A tile includes a PE array including PEs arranged in columns and rows. The size (or dimensions) of a tile is determined by the number of PE columns and the number of PE rows in the tile and may be represented by "the number of PE columns × the number of PE rows." The DNN accelerator can select tiles and assign workloads of running various DNN models to the tiles based on the dimensions of the tile and characteristics of DNN layers.

Using convolutional layers in DNNs as example, the DNN accelerator may search a tile set including a set of heterogenous tiles for running convolutional operations in a DNN. The DNN accelerator may use characteristics of some or all convolutional layers in the DNN layers to search the tile set. The characteristics of a convolutional layer may include dimensions of an output tensor of the convolutional layer. A convolutional operation includes MAC operations on an input tensor and a group of filters, the result of which is an output tensor. The dimensions of the output tensor may include a first dimension ("OX") indicating a number of elements in a row in the matrix, a second dimension ("OY") indicating a number of elements in a column in the matrix, and a third dimension ("OC") indicating a number of output channels in the set of output channels. The dimensions of the output tensor can be determined based on dimensions of the input tensor, dimensions of the filters, and the number of filters used in the convolutional operations.

Within the selected tile set, a tile may be selected for an individual convolutional layer in the DNN in a way to maximize utilization of PEs in the tile set. The DNN accelerator may select the tile based on dimensions of the output tensor of the convolutional layer and the size of the tile. The DNN accelerator may select multiple tiles for a single layer or select a single tile for multiple layers. After the tile is selected, the DNN accelerator can distribute portions of the workload for running the convolutional operation of the layer to individual PEs through a partition of the output tensor. The DNN accelerator can partition the output tensor into segments based on dimensions of the PE array. For instance, the DNN accelerator may partition the output tensor in the OX and OY dimensions based on the number of PE rows in the tile and partition the output tensor in the OC dimension based on the number of PE columns in the tile. Further, the DNN accelerator can assign workloads of generating the output tensor segments to some or all of the PEs in the PE array. A PE can receive a workload of generating a respective output tensor segment and to perform a MAC operation for generating the respective output tensor segment.

Different from conventional DNN accelerators with homogeneous tiles (e.g., tiles having the same dimensions), the present disclosure provides a different type of DNN accelerator that includes homogeneous tiles. The DNN accelerator can also search for a tile set for a DNN, select tiles for layers in the DNN, and distribute workload to individual PEs in a way to maximize utilization of PEs in the tile set. Compared with conventional DNN accelerators, the DNN accelerator in the present disclosure can provide improvement in overall utilization of PEs. Such improvement is available in embodiments where a DNN layer is split over multiple tiles and embodiments where a DNN layer is run by a single tile.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or DNN accelerator that comprises a list of elements is not necessarily limited to only those elements but may include other elements not expressly listed or inherent to such method, process, device, or DNN accelerators. Also, the term "or" refers to an inclusive "or" and not to an exclusive "or."

The DNN systems, methods and devices of this disclosure each have several innovative aspects, no single one of which is solely responsible for all desirable attributes disclosed herein. Details of one or more implementations of the subject matter described in this specification are set forth in the description below and the accompanying drawings.

### Example DNN

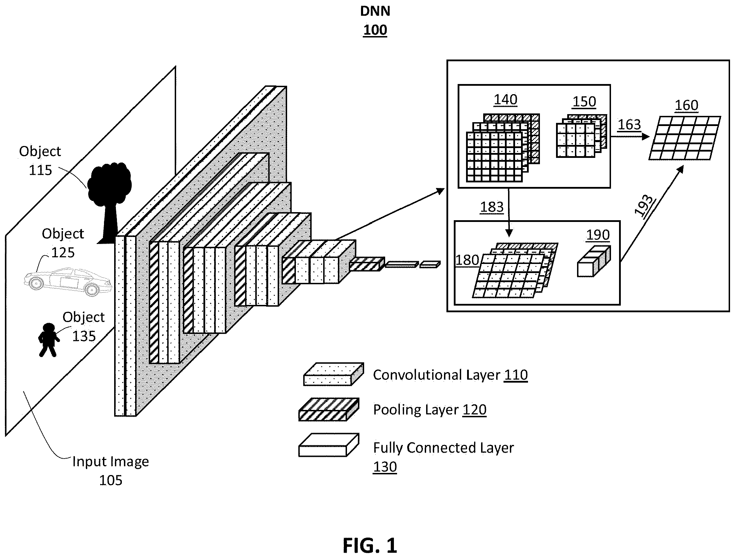

FIG. 1 illustrates an example DNN 100, in accordance with various embodiments. For purpose of illustration, the DNN 100 in FIG. 1 is a convolutional neural network (CNN). In other embodiments, the DNN 100 may be other types of DNNs. The DNN 100 is trained to receive images and output classifications of objects in the images. In the embodiments of FIG. 1, the DNN 100 receives an input image 105 that includes objects 115, 125, and 135. The DNN 100 includes a sequence of layers comprising a plurality of convolutional layers 110 (individually referred to as "convolutional layer 110"), a plurality of pooling layers 120 (individually referred to as "pooling layer 120"), and a plurality of fully connected layers 130 (individually referred to as "fully connected layer 130"). In other embodiments, the DNN 100 may include fewer, more, or different layers. In an inference of the DNN 100, the layers of the DNN 100 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 110 summarize the presence of features in the input image 105. The convolutional layers 110 function as feature extractors. The first layer of the DNN 100 is a convolutional layer 110. In an example, a convolutional layer 110 performs a convolution on an input tensor 140 (also referred to as input feature map (IFM) 140) and a filter 150. As shown in FIG. 1, the IFM 140 is represented by a 7×7×3 three-dimensional (3D) matrix. The IFM 140 includes 3 input channels, each of which is represented by a 7×7 two-dimensional (2D) array. The 7×7 2D array includes 7 input elements (also referred to as input points) in each row and 7 input elements in each column. The filter 150 is represented by a 3×3×3 3D matrix. The filter 150 includes 3 kernels, each of which may correspond to a different input channel of the IFM 140. A kernel a 2D array of weights, where the weights are arranged in columns and rows. A kernel can be smaller than the IFM. In the embodiments of FIG. 1, each kernel is represented by a 3×3 2D array. The 3×3 kernel includes 3 weights in each row and 3 weights in each column. Weights can be initialized and updated by backpropagation using gradient descent. The magnitudes of the weights can indicate importance of the filter 150 in extracting features from the IFM 140.

The convolution includes MAC operations with the input elements in the IFM 140 and the weights in the filter 150. The convolution may be a standard convolution 163 or a depthwise convolution 183. In the standard convolution 163, the whole filter 150 slides across the IFM 140. All the input channels are combined to produce an output tensor 160 (also referred to as output feature map (OFM) 160). The OFM 160 is represented by a 5×5 2D array. The 5×5 2D array includes 5 output elements (also referred to as output points) in each row and 5 output elements in each column. For purpose of illustration, the standard convolution includes one filter in the embodiments of FIG. 1. In embodiments where there are multiple filters, the standard convolution may produce multiple output channels in the OFM 160.

The multiplication applied between a kernel-sized patch of the IFM 140 and a kernel may be a dot product. A dot product is the elementwise multiplication between the kernel-sized patch of the IFM 140 and the corresponding kernel, which is then summed, always resulting in a single value. Because it results in a single value, the operation is often referred to as the "scalar product." Using a kernel smaller than the IFM 140 is intentional as it allows the same kernel (set of weights) to be multiplied by the IFM 140 multiple times at different points on the IFM 140. Specifically, the kernel is applied systematically to each overlapping part or kernel-sized patch of the IFM 140, left to right, top to bottom. The result from multiplying the kernel with the IFM 140 one time is a single value. As the kernel is applied multiple times to the IFM 140, the multiplication result is a 2D array of output elements. As such, the 2D output array (i.e., the OFM 160) from the standard convolution 163 is referred to an OFM.

In the depthwise convolution 183, the input channels are not combined. Rather, MAC operations are performed on an individual input channel and an individual kernel and produce an output channel. As shown in FIG. 1, the depthwise convolution 183 produces a depthwise output tensor 180. The depthwise output tensor 180 is represented by a 5×5×3 3D matrix. The depthwise output tensor 180 includes 3 output channels, each of which is represented by a 5×5 2D array. The 5×5 2D array includes 5 output elements in each row and 5 output elements in each column. Each output channel is a result of MAC operations of an input channel of the IFM 140 and a kernel of the filter 150. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 193 is then performed on the depthwise output tensor 180 and a 1×1×3 tensor 190 to produce the OFM 160.

The OFM 160 is then passed to the next layer in the sequence. In some embodiments, the OFM 160 is passed through an activation function. An example activation function is the rectified linear activation function (ReLU). ReLU is a calculation that returns the value provided as input directly, or the value zero if the input is zero or less. The convolutional layer 110 may receive several images as input and calculates the convolution of each of them with each of the kernels. This process can be repeated several times. For instance, the OFM 160 is passed to the subsequent convolutional layer 110 (i.e., the convolutional layer 110 following the convolutional layer 110 generating the OFM 160 in the sequence). The subsequent convolutional layers 110 performs a convolution on the OFM 160 with new kernels and generates a new feature map. The new feature map may also be normalized and resized. The new feature map can be kernelled again by a further subsequent convolutional layer 110, and so on.

In some embodiments, a convolutional layer 110 has 4 hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 110). The convolutional layers 110 may perform various types of convolutions, such as 2-dimensional convolution, dilated or atrous convolution, spatial separable convolution, depthwise separable convolution, transposed convolution, and so on. The DNN 100 includes 16 convolutional layers 110. In other embodiments, the DNN 100 may include a different number of convolutional layers.

The pooling layers 120 down-sample feature maps generated by the convolutional layers, e.g., by summarizing the presents of features in the patches of the feature maps. A pooling layer 120 is placed between 2 convolution layers 110: a preceding convolutional layer 110 (the convolution layer 110 preceding the pooling layer 120 in the sequence of layers) and a subsequent convolutional layer 110 (the convolution layer 110 subsequent to the pooling layer 120 in the sequence of layers). In some embodiments, a pooling layer 120 is added after a convolutional layer 110, e.g., after an activation function (e.g., ReLU) has been applied to the OFM 160.

A pooling layer 120 receives feature maps generated by the preceding convolution layer 110 and applies a pooling operation to the feature maps. The pooling operation reduces the size of the feature maps while preserving their important characteristics. Accordingly, the pooling operation improves the efficiency of the DNN and avoids over-learning. The pooling layers 120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of 2 pixels, so that the pooling operation reduces the size of a feature map by a factor of 2, e.g., the number of pixels or values in the feature map is reduced to one quarter the size. In an example, a pooling layer 120 applied to a feature map of 6×6 results in an output pooled feature map of 3×3. The output of the pooling layer 120 is inputted into the subsequent convolution layer 110 for further feature extraction. In some embodiments, the pooling layer 120 operates upon each feature map separately to create a new set of the same number of pooled feature maps.

The fully connected layers 130 are the last layers of the DNN. The fully connected layers 130 may be convolutional or not. The fully connected layers 130 receives an input operand. The input operand defines the output of the convolutional layers 110 and pooling layers 120 and includes the values of the last feature map generated by the last pooling layer 120 in the sequence. The fully connected layers 130 applies a linear combination and an activation function to the input operand and generates an individual partial sum. The individual partial sum may contain as many elements as there are classes: element i represents the probability that the image belongs to class i. Each element is therefore between 0 and 1, and the sum of all is worth one. These probabilities are calculated by the last fully connected layer 130 by using a logistic function (binary classification) or a softmax function (multi-class classification) as an activation function.

In some embodiments, the fully connected layers 130 classify the input image 105 and returns an operand of size N, where N is the number of classes in the image classification problem. In the embodiments of FIG. 1, N equals 3, as there are 3 objects 115, 125, and 135 in the input image. Each element of the operand indicates the probability for the input image 105 to belong to a class. To calculate the probabilities, the fully connected layers 130 multiply each input element by weight, makes the sum, and then applies an activation function (e.g., logistic if N=2, softmax if N>2). This is equivalent to multiplying the input operand by the matrix containing the weights. In an example, the individual partial sum includes 3 probabilities: a first probability indicating the object 115 being a tree, a second probability indicating the object 125 being a car, and a third probability indicating the object 135 being a person. In other embodiments where the input image 105 includes different objects or a different number of objects, the individual partial sum can be different.

### Example DNN Accelerator

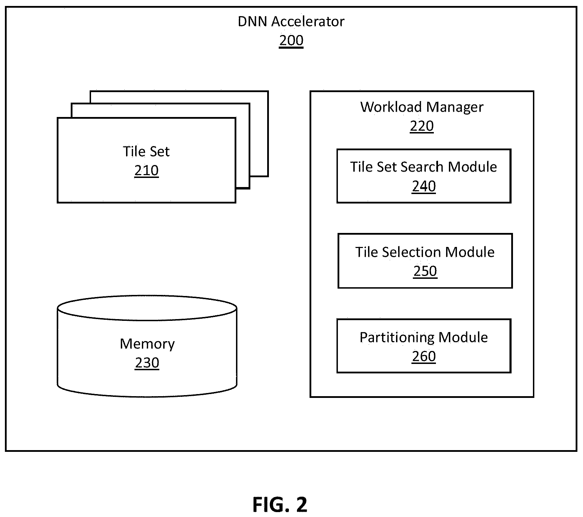

FIG. 2 is a block diagram of an example DNN accelerator 200, in accordance with various embodiments. The DNN accelerator 200 executes tensor operations in a DNN, such as the DNN 100 in FIG. 1. Tensor operations may include convolutional operation, pooling operation, elementwise operation (e.g., elementwise addition, elementwise multiplication, etc.), loading, reducing, other types of tensor operations by the DNN, or some combination thereof. The DNN accelerator 200 includes tile sets 210 (individually referred to as "tile set 210"), a workload manager 220, and a memory 230. In other embodiments, alternative configurations, different or additional components may be included in the DNN accelerator 200. For instance, the DNN accelerator 200 may include various numbers of tile sets 210. Also, the DNN accelerator 200 may include more than one memory. Further, functionality attributed to a component of the DNN accelerator 200 may be accomplished by a different component included in the DNN accelerator 200 or by a different system.

The tile sets 210 include PEs that can run DNN models and function as neurons or nodes of DNNs. A tile set includes multiple PE arrays. A PE array includes PEs arranged in columns and rows. A PE may be a node of a DNN. The PE array may have a size indicating the number of columns, the number of rows, or a combination of both. For instance, for a PE array including 16 columns and 16 rows, the size of the PE array may be represented by "16×16" or "256." The PE arrays in the same tile set 210 can have different sizes. A tile set 210 including PE arrays with different sizes is referred to as a heterogeneous tile. The tile sets 210 may be different combinations of PE arrays. For example, a tile set 210 may include at least one PE array that is different from all the PE arrays in another tile set 210. As another example, even though 2 tile sets 210 have the same PE arrays, the PE arrays may be arranged differently, e.g., locations of the PE arrays may be different.

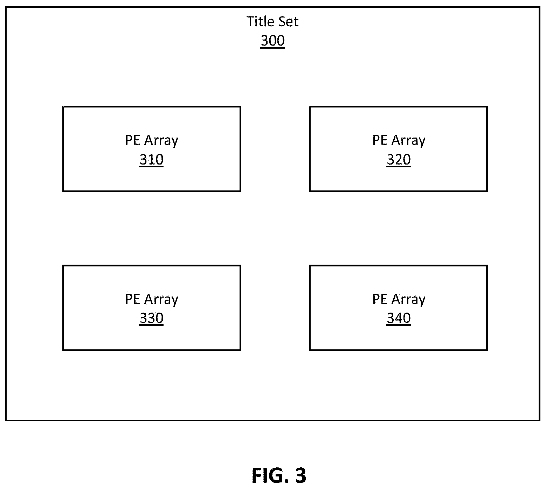

In some embodiments, one or more tile sets 210 may be used for a single DNN. Within a tile set 210, one or more tiles may be used for a single layer, e.g., a convolutional layer. An example convolution layer is a convolutional layer 110 in FIG. 1. In some embodiments, a single tile may be used for more than one layers. The number of tiles within a tile set 210 may vary. It can be a small number like 4, 8, 10, and so on, or a big number like 100, 500, 1000, or even larger. More details regarding tile sets 210 are described below in conjunction with FIGs. 3, 9, and 10A-10C.

The workload manager 220 manages workloads of the tile sets 210. In some embodiments, the workload manager 220 manages workloads of the tile sets 210 in a way to maximize utilization of PEs in one or more tiles or one or more tile sets 210. The utilization of PEs in a tile or tile set may be measured based on a ratio of the number of active PEs to the total number of PEs in the tile or tile set 210. An active PE is a PE that performs one or more MAC operations during the execution of an DNN model. The workload manager 220 includes a tile set search module 240, a tile selection module 250, and a partitioning module 260. In other embodiments, alternative configurations, different or additional components may be included in the DNN accelerator 200. Further, functionality attributed to a component of the DNN accelerator 200 may be accomplished by a different component included in the DNN accelerator 200 or by a different system.

The tile set search module 240 searches a tile set 210 for a DNN model from the tile sets 210. For instance, the tile set search module 240 selects a tile set 210, that when running the DNN model, can achieve higher utilization of PEs than other tile sets 210. In some embodiments, the tile set search module 240 selects a tile set 210 for a DNN based on dimensions of output tensors of convolutional layers in the DNN. An example output tensor is the OFM 160 in FIG. 1. The dimensions of an output tensor may include: a first dimension indicating a number of elements in a row in the matrix, a second dimension indicating a number of elements in a column in the matrix, and a third dimension indicating a number of output channels in the set of output channels. The first dimension may be represented as OX, referring to output dimension along an X-axis in a coordinate system, in which the output tensor can be represented by a cuboid or cube. The second dimension may be represented as OY, referring to output dimension along a Y-axis in the coordinate system. The third dimension may be represented as OC, referring to output dimension along a C-axis in the coordinate system. The X, Y, and Z-axes may be perpendicular to each other.

The tile set search module 240 may use a subset of all convolutional layers in the DNN to select a tile set 210 for the DNN. For instance, the tile set search module 240 may determine 2 factors for each convolutional layer in the DNN. The 2 factors include a first factor equal a product of multiplying OX with OY, which is denoted as OXOY, and a second factor equal OC. The tile set search module 240 may determine a first condition for the first factor, a second condition for the second factor, or a third condition for a combination of the first factor and the second factor. The combination may be a product of the first factor and the second factor. A condition may be a predetermined value range, e.g., 8 to 32, 8 to 64, 128 to 512, and so on. Then the tile set search module 240 can identify convolutional layers that can meet the first condition, the second condition, or both conditions. A condition is met if the value of the corresponding factor falls under the range specified in the condition.

After the tile set search module 240 identifies the convolutional layers in the subset, the tile set search module 240 may rank the convolutional layers in the subset. In an example, the tile set search module 240 finds the most common value of the third factor among all the convolutional layers in the subset. For instance, the tile set search module 240 may determine a frequency of a value of the third factor in the subset. The frequency indicating the number of convolutional layers whose third factors have the value. The tile set search module 240 may use the value of the third factor that has the highest frequency in the subset to determine which tile set 210 can achieve the highest PE utilization and then use the tile set 210 to run the DNN.

The tile selection module 250 selects a tile from a tile set 210 for one or more convolutional layers of a DNN. In some embodiments, a tile may perform a convolutional operation of a single convolution layer at a time. In other embodiments, a tile may perform convolutional operations of 2 or more convolution layers at a time. To select a tile for a convolutional layer, the tile selection module 250 may compare dimensions of the output tensor of the convolutional layer with dimensions of each tile in the tile set 210. For instance, the tile selection module 250 may compare the number of PE columns in each tile with OC of the output tensor and compare the number of PE rows in each tile with OXOY of the output tensor.

In some embodiments (such as embodiments where the convolutional operation can be executed by one tile), the tile selection module 250 may determine a first difference between the number of PE columns and OC of the output tensor and determines a second difference between the number of PE rows and OXOY. The tile selection module 250 may determine an aggregated difference for each tile by aggregating the first difference and second difference of the tile. The tile selection module 250 may select the tile having the smallest aggregated difference as the tile for the convolutional layer.

In other embodiments (such as embodiments where the convolutional operation needs multiple tiles, e.g., a subset of tiles in the tile set 210), the tile selection module 250 may determine a first difference between the total number of PE columns in the subset and OC of the output tensor and determines a second difference between the total number of PE rows in the subset and OXOY. The tile selection module 250 may determine an aggregated difference for each subset by aggregating the first difference and second difference of the subset. The tile selection module 250 may select the tiles in a subset having the smallest aggregated difference as the tiles for the convolutional layer.

The partitioning module 260 partitions the workload of a tile for a convolutional operation into workloads of individual PEs in the tile based on dimensions of an output tensor and assigns the workloads to individual PEs. As part of the mapping of workload on the PE array, the mapping of the dimensions OX, OY, and OC of the output tensor on the PE array can have a significant impact on the PE utilization (and hence performance) of the DNN accelerator 200. The partitioning module 260 can partition the output tensor to segments map the output tensor segments to individual PEs. The partitioning may be done for each layer of the DNN. The partitioning may determine the active PEs in the PE array while running the convolutional operation of the layer and thereby can determine the performance and power for the layer.

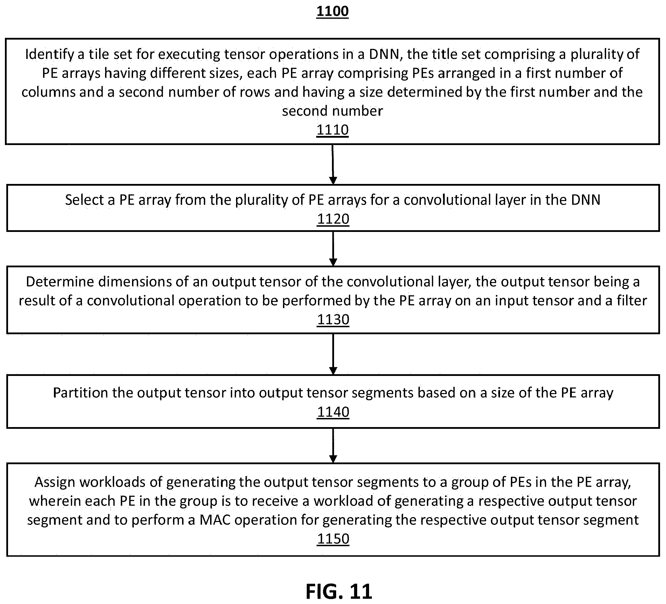

In some embodiments, the partitioning module 260 partitions the output tensor based on dimensions of the PE array. In some embodiments, the partitioning module 260 partitions OX and OY of the output tensor based on the number of PE rows in the tile, and partitions OC of the output tensor based on the number of PE columns in the tile. For instance, the partitioning module 260 may determine the OX and OY for each output tensor segment based on the number of PE rows and determine the OC of each output tensor segment based on the number of PE columns. Then the partitioning module 260 can identify the portions of the input tensor and filter for computing each output tensor segments, and transmit the portions of the input tensor and filter to the individual PEs for running MAC operations to computer the output tensor segments. Certain aspects of the workload manager 220 are described below in conjunction with FIG. 11.

The memory 230 stores data associated with the DNN accelerator 200, such as data used by the DNN accelerator 200 for deep learning, data generated by the DNN accelerator 200, or data otherwise associated with the DNN accelerator 200. In some embodiments, the DNN accelerator 200 may be associated with multiple memories. In some embodiments, the memory 230 stores data associated with MAC operations. For instance, the memory stores some or all of the input, filters, and output of a DNN layer. In some embodiments, the memory 230 is a random-access memory (RAM), such as a static RAM (SRAM). The memory 230 may be byte-addressable, and each memory address identifies a single byte (8 bits) of storage. The memory 230 includes a plurality of storage units, each of which stores a single byte and has a memory address. Data larger than a single byte may be stored in storage units with consecutive memory addresses, i.e., adjacent storage units. For instance, 2 storage units may be needed to store a number in the FP16 or BF16 format, which has 16 bits. In some embodiments, 16 bits can be transferred from the memory 230 in a single reading cycle. In other embodiments, 16 bits can be transferred from the memory 230 in multiple reading cycles, such as 2 cycles.

FIG. 3 is a block diagram of a tile set 300, in accordance with various embodiments. The tile set 300 may be an example of a tile set 210 in FIG. 2. For simplicity and illustration, the tile set 210 in FIG. 3 includes 4 PE arrays 310, 320, 330, and 340. A PE array may constitute a tile. In other embodiments, the tile set 210 may include a different number of PE arrays. Each PE array includes PEs arranged in columns and rows. Dimensions of the PE array may be determined by the number of PE columns and the number of PE rows. Also, a spatial area of the PE array may depend on the number of PE columns and the number of PE rows in the PE array. A PE array having more PE columns and PE rows can have a bigger area.

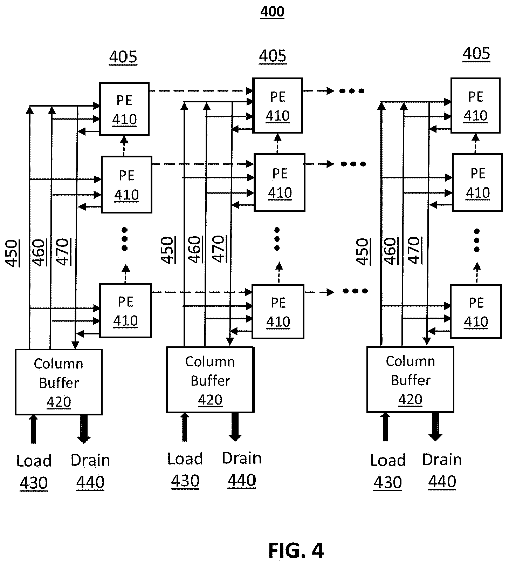

The tile set 300 is a set of heterogeneous PE array (also referred to as "heterogeneous tile set"), meaning at least one of the PE arrays 310, 320, 330, and 340 has at least one different dimension from the other PE arrays in the tile set 300. In an example, the PE array 310 may have more (or fewer) PE rows or columns than other PE arrays. Some of the PE arrays 310, 320, 330, and 340 may have same dimensions. For instance, 2 or 3 of the PE arrays 310, 320, 330, and 340 may have the same number of PE rows or PE columns. In some embodiments, each PE array has a different number of PE rows or PE columns from any of the other PE arrays. More information regarding PE array are described below in conjunction with FIGs. 4, 9 and 10.

FIG. 4 illustrates a PE array 400, in accordance with various embodiments. The PE array 400 is an embodiment of one or more of the PE arrays 310, 320, 330, and 340 in FIG. 3. The PE array 400 includes a plurality of PEs 410 (individually referred to as "PE 410"). The PEs 410 perform MAC operations, such as integer MAC operations, floating-point MAC operations, and so on. The PEs 410 may also be referred to as neurons or nodes in the DNN. Each PE 410 has 2 input signals 450 and 460 and an output signal 470. The input signal 450 is at least a portion of an IFM to the layer. The input signal 460 is at least a portion of a filter of the layer. In some embodiments, the input signal 450 of a PE 410 includes one or more input operands, and the input signal 460 includes one or more weight operand.

Each PE 410 performs an MAC operation on the input signals 450 and 460 and outputs the output signal 470, which is a result of the MAC operation. Some or all of the input signals 450 and 460 and the output signal 470 may be in an integer format, such as INT8, or FP format, such as FP16 or BF16. For purpose of simplicity and illustration, the input signals and output signal of all the PEs 410 have the same reference numbers, but the PEs 410 may receive different input signals and output different output signals from each other. Also, a PE 410 may be different from another PE 410, e.g., including more, fewer, or different components.

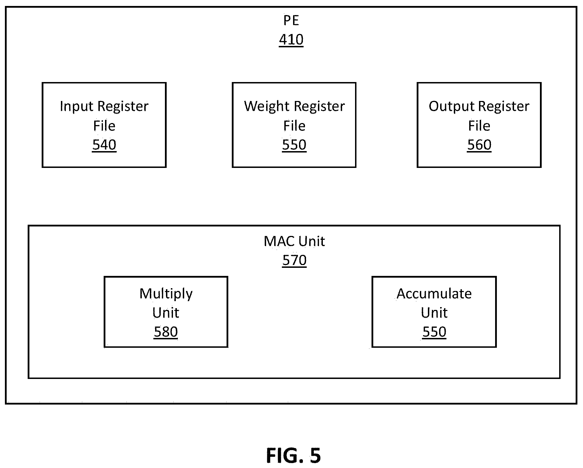

As shown in FIG. 4, the PEs 410 are connected to each other, as indicated by the dash arrows in FIG. 4. The output signal 470 of an PE 410 may be sent to many other PEs 410 (and possibly back to itself) as input signals via the interconnections between PEs 410. In some embodiments, the output signal 470 of an PE 410 may incorporate the output signals of one or more other PEs 410 through an accumulate operation of the PE 410 and generates an internal partial sum of the PE array. More details about the PEs 410 are described below in conjunction with FIGs. 5-7.

In the embodiments of FIG. 4, the PEs 410 are arranged into columns 405 (individually referred to as "column 405"). The input and weights of the layer may be distributed to the PEs 410 based on the columns 405. Each column 405 has a column buffer 420. The column buffer 420 stores data provided to the PEs 410 in the column 405 for a short amount of time. The column buffer 420 may also store data output by the last PE 410 in the column 405. The output of the last PE 410 may be a sum of the MAC operations of all the PEs 410 in the column 405, which is a column-level internal partial sum of the PE array 400. In other embodiments, input and weights may be distributed to the PEs 410 based on rows in the PE array 400. The PE array 400 may include row buffers in lieu of column buffers 420. A row buffer may store input signals of the PEs in the corresponding row and may also store a row-level internal partial sum of the PE array 400.

As shown in FIG. 4, each column buffer 420 is associated with a load 430 and a drain 440. The data provided to the column 405 is transmitted to the column buffer 420 through the load 430, e.g., through upper memory hierarchies, e.g., the memory 230 in FIG. 2. The data generated by the column 405 is extracted from the column buffers 420 through the drain 440. In some embodiments, data extracted from a column buffer 420 is sent to upper memory hierarchies, e.g., the memory 230 in FIG. 2, through the drain operation. In some embodiments, the drain operation does not start until all the PEs 410 in the column 405 has finished their MAC operations. In some embodiments, the load 430 or drain 440 may be controlled by the workload manager 220 in FIG. 2.

FIG. 5 is a block diagram of a PE 410, in accordance with various embodiments. The PE 410 in FIG. 4 includes an input register file 540, a weight register file 550, an output register file 560, and a MAC unit 570. In other embodiments, the PE 410 may include fewer, more, or different components.

The input register file 540 temporarily stores input signals (e.g., contexts) received by the PE 410. The input feature data may include input feature data and output signals from other PEs 510. The weight register file 550 temporarily stores weights received by the PE 410. The output register file 560 temporarily stores output signals generated by the PE 410. For purpose of illustration and simplicity, the PE 410 in FIG. 5B includes one input register file 540, one weight register file 550, one output register file 560. In other embodiments, a PE 410 may include multiple register files for each type of data.

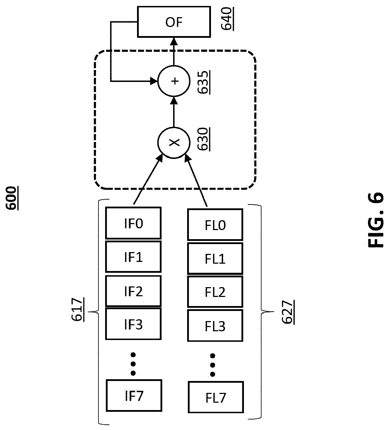

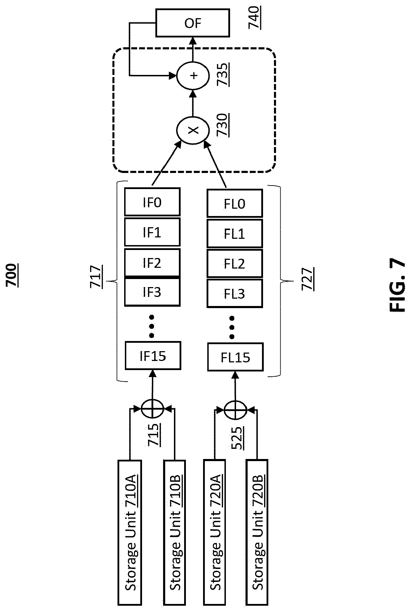

The MAC unit 570 performs MAC operations on data in the input register file 540 and weight register file 550. The MAC unit 570 includes a multiply unit 580 and an accumulate unit 590. The multiply unit 580 performs multiply operations on input feature data in the input register file 540 and weights in the weight register file 550. The amount of time needed by the multiply unit 580 for a multiple operation depends on the sparsity level of the weights used in the multiple operation. If the weights are denser (i.e., the sparsity level is lower), the multiply unit 580 needs more time to perform the multiple operation. The accumulate unit 590 performs accumulate operations on the output of the multiply unit 580 and outputs signals from other PEs. The output of the accumulate unit 590 is the output signal of the PE 410. More details regarding MAC operations in PE are described below in conjunction with FIGs. 6 and 7.

### Example MAC Operations

FIG. 6 illustrates an integer MAC operation 600 by a PE, in accordance with various embodiments. The PE includes an input register file 617, a weight register file 627, a multiplier 630, an accumulator 635, and an output register file 640. The PE may be an embodiment of a PE 410 in FIG. 4. In other embodiments, the PE may include fewer, more, or different components.

In the integer MAC operation 600, the bits in the input register file 617 and the weight register file 627 are fed sequentially into a multiplier 630, where the multiplier 630 performs a series of multiplication operations. Each multiplication operation is with a bit from the input register file 617 and a bit from the weight register file 627. The results of the multiplication operations are fed into an accumulator 635, which generates an individual partial sum of the PE. The individual partial sum of the PE can be stored in the output register file 640. The series of multiplication operations by the multiplier 630 and the accumulation operation by the accumulator 635 may constitute a MAC operation by the PE. The multiplier 630 and the accumulator 635 may operate with various integer formats or fixed-point formats.

FIG. 7 illustrates a floating-point MAC operation 700 by a PE, in accordance with various embodiments. The PE includes an input register file 717, a weight register file 727, a multiplier 730, an accumulator 735, and an output register file 740. The PE may be an embodiment of a PE 410 in FIG. 4. In other embodiments, the PE may include fewer, more, or different components.

In the embodiments of FIG. 7, the floating-point MAC operation 700 starts with storage units 710A, 710B, 720A, and 720B of a memory, such as a SRMA. The storage unit 710A stores a byte of an input operand. The storage unit 710B stores another byte of the input operand. The storage unit 720A stores a byte of a weight operand. The storage unit 720B stores another byte of the weight operand. The bytes in the storage units 710A and 710B are fed into a concatenating module 715, which links the 2 bytes and generates a sequence of 16 bits. The concatenating module 715 transfers the 16 bits into the input register file 717 where the 16 bits are stored sequentially. Similarly, the bytes in the storage units 720A and 720B are fed into a concatenating module 725, which links the 2 bytes and generates a sequence of 16 bits. The concatenating module 725 transfers the 16 bits into the weight register file 727 where the 16 bits are stored sequentially. In some embodiments, a bit is stored in a storage unit of the corresponding register file.

The bits in the input register file 717 and the weight register file 727 are fed sequentially into a multiplier 730, where the multiplier 730 performs a series of multiplication operations. Each multiplication operation is with a bit from the input register file 717 and a bit from the weight register file 727. The results of the multiplication operations are fed into an accumulator 735, which generates an individual partial sum of the PE. The individual partial sum of the PE can be stored in the output register file 740. The series of multiplication operations by the multiplier 730 and the accumulation operation by the accumulator 735 may constitute an floating-point MAC operation by the PE. The accumulator 735 may operate with a different floating-point bit precision from the multiplier 730. In an example, the multiplier 730 performs multiplications with FP16 or BF16 format, but the accumulator 735 performs accumulations with FP32 format.

### Example Convolution Workload

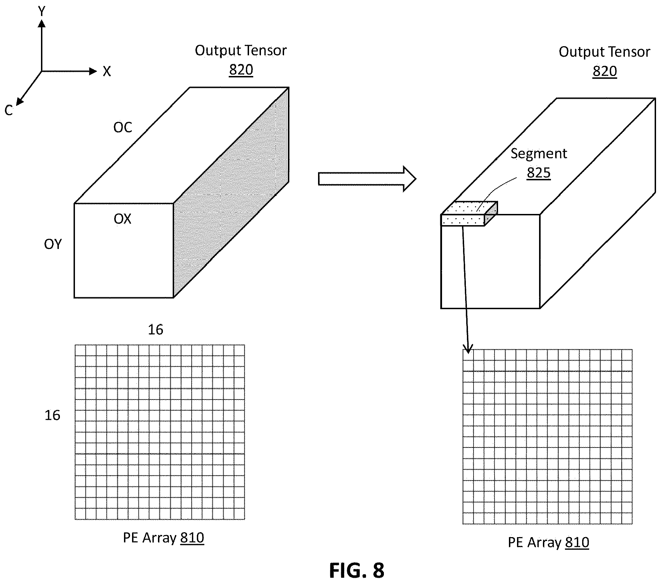

FIG. 8 illustrates partitioning of a convolution workload to be operated by a PE array 810, in accordance with various embodiments. The PE array 810 may be an embodiment of the PE array 310, 320, 330, 340, or 400 described above in conjunction with FIGs. 3 and 4. For purpose of illustration, the PE array 810 in FIG. 8 includes 16 PE columns and 16 PE rows. Each element in the PE array 810 represents an individual PE. The convolution workload is a workload of a convolution operation. The convolution operation may include a plurality of MAC operations by PEs in the PE array 910. A PE may perform at least one of the MAC operations. An example of the MAC operations may be the integer MAC operation 600 in FIG 6 or the floating-point MAC operation in FIG. 7.

The convolution operation has an output tensor 820 having dimensions OX, OY, and OC. The output tensor 820 is represented by cuboid in the coordinate system in FIG. 8, where OX indicates a dimension of the output tensor 820 along the X-axis, OY indicates a dimension of the output tensor 820 along the Y-axis, and OC indicates a dimension of the output tensor 820 along the C-axis. OX, OY, and OC can be determined based on dimensions of the input tensor and filter of the convolution operation. For instance, OC may equal the number of filters of the convolutional operational. OX may be determined based on the corresponding dimension (e.g., dimension along the X-axis) of the input tensor and the corresponding dimension (e.g., dimension along the X-axis) of the filter. OY may be determined based on the corresponding dimension (e.g., dimension along the Y-axis) of the input tensor and the corresponding dimension (e.g., dimension along the Y-axis) of the filter.

In the embodiments of FIG. 8, the convolution workload is partitioned into a plurality of individual workloads to be assigned to individual PEs in the PE array 810. The partitioning of the convolutional workload is conducted through partitioning of the output tensor 820, e.g., by the partitioning module 260. The partitioning module 260 can partition the output tensor 820 based on dimension of the PE array 810 and dimensions of the output tensor 820. In an example, the output tensor 810 has a spatial size of 14×14×256, where OX=14, OY=14, and OC=256. The partitioning module 260 splits the output tensor 820 into segments 825 (individually referred to as "segment 825"). The segments 825 have the same dimensions. The partitioning module 260 may determine dimensions of a segment 825 based on the dimensions of the output tensor 810 and the PE array 820. Each segment 825 corresponds to an individual PE in the PE array 810. The partitioning module 260 may transmit at least a portion of the input tensor and at least a portion of the filters to the PE as input signals of the PE. The PE can perform MAC operations on the input signals to compute the segment 825.

The partitioning module 260 may determine OC of the segment 825 based on the number of PE columns (i.e., 16) of the PE array 810 and the OC (i.e., 256) of the output tensor 820, e.g., the OC of the segment 825 is a result of dividing the OC of the output tensor 820 by the number of PE columns in the PE array 810. The partitioning module 260 may determine OX and OY of the segment 825 based on the number of PE rows (i.e., 16) of the PE array 810 and the OX (i.e., 14) and OY (i.e., 14) of the output tensor 820. To determine the OX and OY of the segment 825, the partitioning module 260 may determine 2 integer numbers, the product of which is no larger than the number of PE rows and use the 2 integer numbers as the OX and OY of the segment 825. IN some embodiments, the partitioning module 260 may select an integer number that is a divisor of the OX of the output tensor 820 as the OX of the segment 825, select an integer number that is a divisor of the OY of the output tensor 820 as the OY of the segment 825, or both. In an embodiment, the segment 825 has dimensions of OX=7, OY=2, and OC=16. In other embodiments, the segment 825 may have different dimensions.

### Example Homogeneous Tile Set

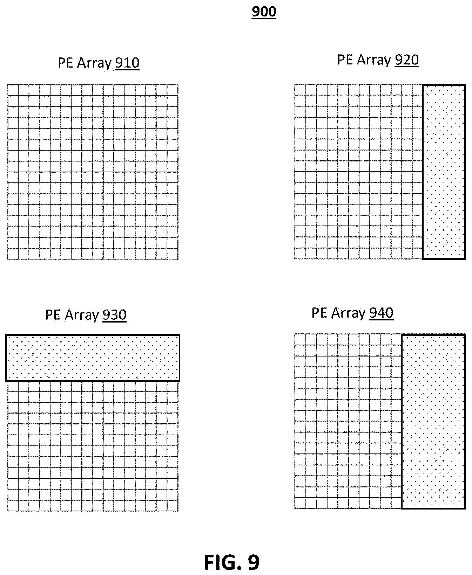

FIG. 9 illustrates an example homogeneous tile set 900, in accordance with various embodiments. The tile set 900 includes 4 PE arrays 910, 920, 930, and 940. The tile set 900 is not a heterogeneous tile set. Rather, the tile set 900 is a homogeneous tile set, where all the PE arrays 910, 920, 930, and 940 have the same dimension. For purpose of simplicity and illustration, the dimension of the PE arrays 910, 920, 930, and 940 is 16×16, i.e., each PE array includes 16 columns and 16 rows. In other embodiments, the tile set 900 may include fewer or more PE arrays. Also, the dimension of the PE arrays may be different.

Such a homogeneous tile set, when used to execute a DNN model, may not result in the most optimal PE utilization and performance for the DNN accelerator. Different workloads can be assigned to the PE arrays 910, 920, 930, and 940. Usually, the tile set 900 is selected for a DNN based on the heaviest workload in the DNN. For instance, each PE array may be used for a different convolutional layer, and the tile set 900 is selected so that a PE array can execute the convolutional operation of a layer having a biggest output tensor. The PE array receiving the heaviest workload (e.g., the PE array 910) may achieve the best PE utilization, i.e., the ratio of the number of active PEs to the number of all PEs in the PE array is the highest among the PE arrays 910, 920, 930, and 940. However, as different layers have different workloads, the other PE arrays 920, 930, and 940 may receive smaller workloads and the PE utilization would be lower.

As shown in FIG. 9, all the PEs in the PE array 910 are active. However, in the PE array 920, the PEs in 4 columns are inactive, i.e., idle, meaning these PEs do not perform any MAC operations for the convolutional operation assigned to the PE array 920. The idle PEs are represented by the dotted shade. Similarly, in the PE array 930, the PEs in the top 4 rows are idle. In the PE array 940, the PEs in the right 5 columns are idle. Given the presence of the idle PEs in the PE arrays 920, 930, and 940, the overall PE utilization of the tile set 900 is low, even though the PE utilization of the PE array 910 is 100%.

### Example Heterogeneous Tile Sets

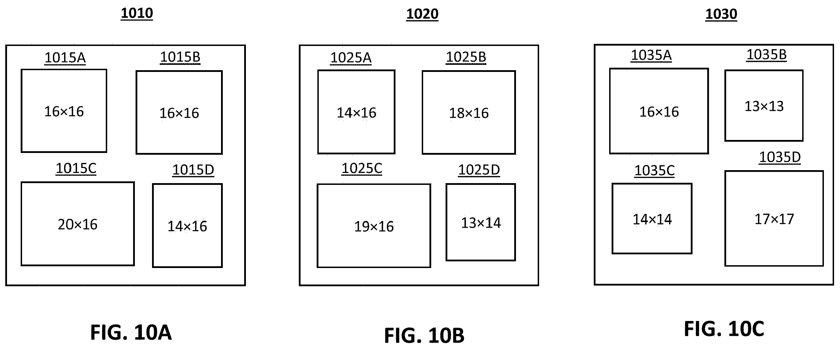

FIGs. 10A-10C illustrate example heterogeneous tile sets 1010, 1020, and 1030, in accordance with various embodiments. FIG. 10A shows a heterogeneous tile set 1010 that includes 4 PE arrays 1015A-1015D. The PE arrays 1015A and 1015B have the same size, 16×16. The PE array 1015C has a different size, 20×16. The PE array 1015D has another different size, 14×16. FIG. 10B shows a heterogeneous tile set 1020 that includes 4 PE arrays 1025A-1025D. All the 4 PE arrays 1025A-1025D have different sizes. The size of the PE array 1025A is 16×16. The size of the PE array 1025B is 18×16. The size of the PE array 1025C is 19×16. The size of the PE array 1025D is 13×16. FIG. 10C shows a heterogeneous tile set 1030 that includes 4 PE arrays 1035A-1035D. All the 4 PE arrays 1035A-1035D have different sizes. The size of the PE array 1035A is 16×16. The size of the PE array 1035A is 13×13. The size of the PE array 1025C is 14×14. The size of the PE array 1025D is 17×17. The number of PE arrays and sizes of the PE arrays in the heterogeneous tile sets 1010, 1020, and 1030 in FIG. 10 are for purpose of simplicity and illustration. In other embodiments, a heterogeneous tile set may include a different number of PE arrays and a PE array may have a different size.

The heterogeneous tile sets 1010, 1020, and 1030 may be part of a DNN accelerator, such as the DNN accelerator in FIG. 2. Give the availability of PE arrays having different sizes, the PE utilization in the execution of DNN models by the DNN accelerator can be better, compared with homogeneous tiles. In some embodiments, one or more of the heterogeneous tile sets 1010, 1020, and 1030 may be selected for running a DNN model, e.g., by the tile set search module 240. Within a heterogeneous tile set, a tile may be selected for one or more layers in the DNN, e.g., by the tile selection module 250. After a tile is selected for a layer, the workload for running the convolutional operation of the layer may be partitioned and assigned to individual PEs in the PE array, e.g., by the partitioning module 260.

### Example Method of Deep Learning

FIG. 11 is a flowchart showing a method 1100 of deep learning, in accordance with various embodiments. The method 1100 may be performed by the workload manager 220 in FIG. 2. Although the method 1100 is described with reference to the flowchart illustrated in FIG. 11, many other methods for deep learning may alternatively be used. For example, the order of execution of the steps in FIG. 11 may be changed. As another example, some of the steps may be changed, eliminated, or combined.

The workload manager 220 identifies 1110 a tile set for executing tensor operations in a DNN. An example of the DNN is the DNN 100 in FIG. 1. The tile set includes a plurality of PE arrays. The PE arrays have different sizes. Each PE array includes PEs arranged in a first number of columns and a second number of rows. The PE has a size that is determined by the first number and the second number. An example tile set is a tile set 210 in FIG. 2. An example PE array is the PE array 400 in FIG. 4. An example PE is the PE 410 in FIGs. 4 and 5.

In some embodiments, the workload manager 220 may select the tile set from a plurality of tile sets. The plurality of tile sets are combinations of different PE arrays. For instance, the workload manager 220 may determine dimensions of output tensors of a plurality of convolutional layers in the DNN. The workload manager 220 may identify a set of dimensions from the dimensions of the output tensors. The set of dimensions are dimensions of output tensors of multiple convolutional layers of the plurality of convolutional layers. The workload manager 220 may identify the tile set from a plurality of tile sets based on the set of dimensions. In some embodiments, an input tensor of a convolutional layer has a set of dimensions the set of dimensions, and the set of dimensions identified by the workload manager 220 has a higher frequency than any other set of dimensions in the DNN. For instance, the identified set of dimensions are dimensions of output tensors of more convolutional layers than any other sets of dimensions.

Then the workload manager 220 classifies the convolutional layers in the subset into a plurality of groups. Each group includes one or more convolution layers with output tensors having same dimensions. The workload manager 220 can rank the groups based on numbers of convolutional layers in the groups and select a group from the groups based on the ranking. The workload manager 220 can further identify the tile set, based on dimensions of a convolutional layer in the group, the tile set from a plurality of tile sets. Each of the plurality of tile sets is a combination of different PE arrays.

The workload manager 220 selects 1120 a PE array from the plurality of PE arrays for a convolutional layer in the DNN. The PE array can a part or a whole convolution operation in the convolutional layer. In some embodiments workload manager 220 selects a group of PE arrays from the plurality of PE arrays for the convolutional layer in the DNN. The group of PE arrays includes the PE array. Each PE array in the group may perform a portion of the convolutional operation. The workload manager 220 may assign workloads for different portions of the convolutional operation to the PE arrays. Each PE array may receive the workload of a different portion of the convolutional operation.

The workload manager 220 determines 1130 dimensions of an output tensor of the convolutional layer. The output tensor is a result of a convolutional operation to be performed by the PE array on an input tensor and a filter. In some embodiments, the output tensor includes a set of output channels. Each channel includes a matrix. The dimensions of the output tensor include a first dimension indicating a number of elements in a row in the matrix, a second dimension indicating a number of elements in a column in the matrix, and a third dimension indicating a number of output channels in the set of output channels. The workload manager 220 may determine the dimensions of the output tensor based on dimensions of the input tensor, a number of kernels in the filter, and dimensions of the kernels.

The workload manager 220 partitions 1140 the output tensor into output tensor segments based on a size of the PE array. In some embodiments, the workload manager 220 may determine a fourth dimension and a fifth dimension of each output tensor segment based on the first number. The workload manager 220 may also determine a sixth dimension based on the second number. The fourth dimension indicates a number of elements in a row in the matrix. The fifth dimension indicates a number of elements in a column in the matrix. The sixth dimension indicates a number of output channels in the set of output channels

The workload manager 220 assigns 1150 workloads of generating the output tensor segments to a group of PEs in the PE array. Each PE in the group is to receive a workload of generating a respective output tensor segment and to perform a MAC operation for generating the respective output tensor segment. In some embodiments, for a workload of generating an output tensor segment, the workload manager 220 may identify a segment of the input tensor and a segment of the filter. The workload manager 220 may also transmit the segment of the input tensor and the segment of the filter into a PE in the group. The PE is to perform one or more MAC operations on the segment of the input tensor and the segment of the filter and to output the output tensor segment. The PE may include an input register file for storing the segment of the input tensor, a weight register file for storing the segment of the filter, an output register file for storing the output tensor segment, and a MAC unit for performing the one or more MAC operations. The input tensor may include one or more integer values or one or more floating-point values. A MAC operation may be an integer MAC operation (e.g., the integer MAC operation in FIG. 6) or a floating-point MAC operation (e.g., the floating-point MAC operation in FIG. 7).

### Example Deep Learning Environment

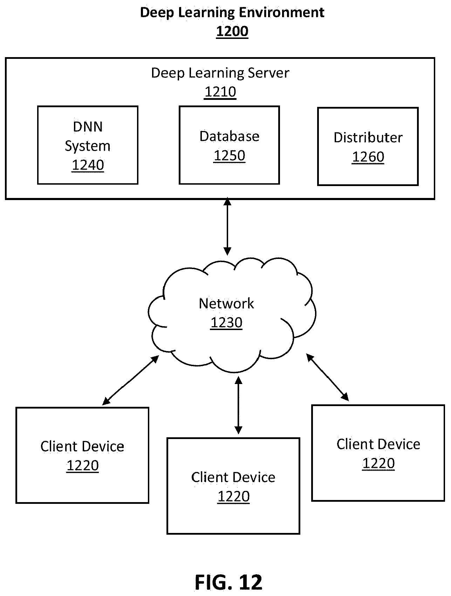

FIG. 12 illustrates a deep learning environment 1200, in accordance with various embodiments. The deep learning environment 1200 includes a deep learning server 1210 and a plurality of client devices 1220 (individually referred to as client device 1220). The deep learning server 1210 is connected to the client devices 1220 through a network 1230. In other embodiments, the deep learning environment 1200 may include fewer, more, or different components.

The deep learning server 1210 trains deep learning models using neural networks. A neural network is structured like the human brain and consists of artificial neurons, also known as nodes. These nodes are stacked next to each other in 3 types of layers: input layer, hidden layer(s), and output layer. Data provides each node with information in the form of inputs. The node multiplies the inputs with random weights, calculates them, and adds a bias. Finally, nonlinear functions, also known as activation functions, are applied to determine which neuron to fire. The deep learning server 1210 can use various types of neural networks, such as DNN, recurrent neural network (RNN), generative adversarial network (GAN), long short-term memory network (LSTMN), and so on. During the process of training the deep learning models, the neural networks use unknown elements in the input distribution to extract features, group objects, and discover useful data patterns. The deep learning models can be used to solve various problems, e.g., making predictions, classifying images, and so on. The deep learning server 1210 may build deep learning models specific to particular types of problems that need to be solved. A deep learning model is trained to receive an input and outputs the solution to the particular problem.

In FIG. 12, the deep learning server 1210 includes a DNN system 1240, a database 1250, and a distributer 1260. The DNN system 1240 trains DNNs. The DNNs can be used to process images, e.g., images captured by autonomous vehicles, medical devices, satellites, and so on. In an embodiment, a DNN receives an input image and outputs classifications of objects in the input image. An example of the DNNs is the DNN 100 described above in conjunction with FIG. 1. In some embodiments, the DNN system 1240 trains DNNs through knowledge distillation, e.g., dense-connection based knowledge distillation. The trained DNNs may be used on low memory systems, like mobile phones, IOT edge devices, and so on. An embodiment of the DNN system 1240 is the DNN accelerator 200 described above in conjunction with FIG. 2.

The database 1250 stores data received, used, generated, or otherwise associated with the deep learning server 1210. For example, the database 1250 stores a training dataset that the DNN system 1240 uses to train DNNs. In an embodiment, the training dataset is an image gallery that can be used to train a DNN for classifying images. The training dataset may include data received from the client devices 1220. As another example, the database 1250 stores hyperparameters of the neural networks built by the deep learning server 1210.

The distributer 1260 distributes deep learning models generated by the deep learning server 1210 to the client devices 1220. In some embodiments, the distributer 1260 receives a request for a DNN from a client device 1220 through the network 1230. The request may include a description of a problem that the client device 1220 needs to solve. The request may also include information of the client device 1220, such as information describing available computing resource on the client device. The information describing available computing resource on the client device 1220 can be information indicating network bandwidth, information indicating available memory size, information indicating processing power of the client device 1220, and so on. In an embodiment, the distributer may instruct the DNN system 1240 to generate a DNN in accordance with the request. The DNN system 1240 may generate a DNN based on the information in the request. For instance, the DNN system 1240 can determine the structure of the DNN and/or train the DNN in accordance with the request.

In another embodiment, the distributer 1260 may select the DNN from a group of pre-existing DNNs based on the request. The distributer 1260 may select a DNN for a particular client device 1220 based on the size of the DNN and available resources of the client device 1220. In embodiments where the distributer 1260 determines that the client device 1220 has limited memory or processing power, the distributer 1260 may select a compressed DNN for the client device 1220, as opposed to an uncompressed DNN that has a larger size. The distributer 1260 then transmits the DNN generated or selected for the client device 1220 to the client device 1220.

In some embodiments, the distributer 1260 may receive feedback from the client device 1220. For example, the distributer 1260 receives new training data from the client device 1220 and may send the new training data to the DNN system 1240 for further training the DNN. As another example, the feedback includes an update of the available computer resource on the client device 1220. The distributer 1260 may send a different DNN to the client device 1220 based on the update. For instance, after receiving the feedback indicating that the computing resources of the client device 1220 have been reduced, the distributer 1260 sends a DNN of a smaller size to the client device 1220.

The client devices 1220 receive DNNs from the distributer 1260 and applies the DNNs to perform machine learning tasks, e.g., to solve problems or answer questions. In various embodiments, the client devices 1220 input images into the DNNs and uses the output of the DNNs for various applications, e.g., visual reconstruction, augmented reality, robot localization and navigation, medical diagnosis, weather prediction, and so on. A client device 1220 may be one or more computing devices capable of receiving user input as well as transmitting and/or receiving data via the network 1230. In one embodiment, a client device 1220 is a conventional computer system, such as a desktop or a laptop computer. Alternatively, a client device 1220 may be a device having computer functionality, such as a personal digital assistant (PDA), a mobile telephone, a smartphone, an autonomous vehicle, or another suitable device. A client device 1220 is configured to communicate via the network 1230. In one embodiment, a client device 1220 executes an application allowing a user of the client device 1220 to interact with the deep learning server 1210 (e.g., the distributer 1260 of the deep learning server 1210). The client device 1220 may request DNNs or send feedback to the distributer 1260 through the application. For example, a client device 1220 executes a browser application to enable interaction between the client device 1220 and the deep learning server 1210 via the network 1230. In another embodiment, a client device 1220 interacts with the deep learning server 1210 through an application programming interface (API) running on a native operating system of the client device 1220, such as IOS° or ANDROID^{™}.

In an embodiment, a client device 1220 is an integrated computing device that operates as a standalone network-enabled device. For example, the client device 1220 includes display, speakers, microphone, camera, and input device. In another embodiment, a client device 1220 is a computing device for coupling to an external media device such as a television or other external display and/or audio output system. In this embodiment, the client device 1220 may couple to the external media device via a wireless interface or wired interface (e.g., an HDMI (High-Definition Multimedia Interface) cable) and may utilize various functions of the external media device such as its display, speakers, microphone, camera, and input devices. Here, the client device 1220 may be configured to be compatible with a generic external media device that does not have specialized software, firmware, or hardware specifically for interacting with the client device 1220.

The network 1230 supports communications between the deep learning server 1210 and client devices 1220. The network 1230 may comprise any combination of local area and/or wide area networks, using both wired and/or wireless communication systems. In one embodiment, the network 1230 may use standard communications technologies and/or protocols. For example, the network 1230 may include communication links using technologies such as Ethernet, 12010.11, worldwide interoperability for microwave access (WiMAX), 3G, 4G, code division multiple access (CDMA), digital subscriber line (DSL), etc. Examples of networking protocols used for communicating via the network 1230 may include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 1230 may be represented using any suitable format, such as hypertext markup language (HTML) or extensible markup language (XML). In some embodiments, all or some of the communication links of the network 1230 may be encrypted using any suitable technique or techniques.

### Example DNN System

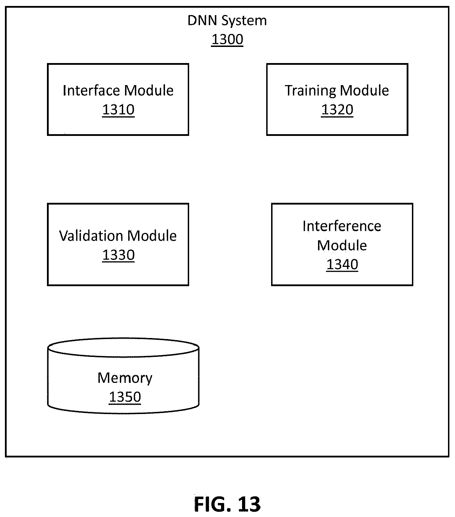

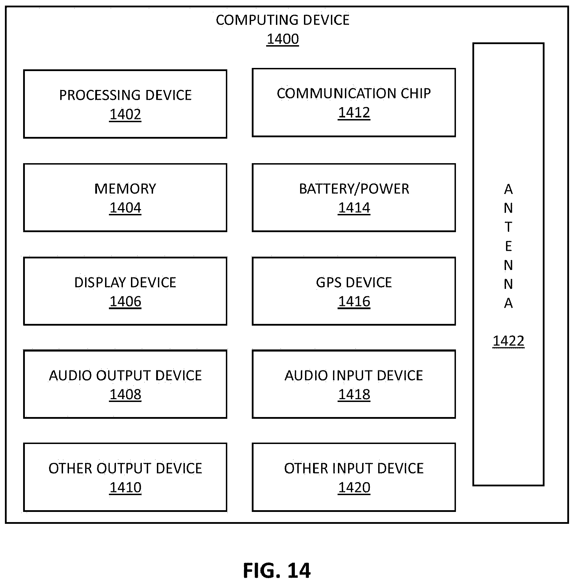

FIG. 13 is a block diagram of an example DNN system 1300, in accordance with various embodiments. The whole DNN system 1300 or a part of the DNN system 1300 may be implemented in the computing device 1400 in FIG. 14. The DNN system 1300 trains DNNs for various tasks, such as image classification, learning relationships between biological cells (e.g., DNA, proteins, etc.), control behaviors for devices (e.g., robots, machines, etc.), and so on. The DNN system 1300 includes an interface module 1310, a training module 1320, a validation module 1330, an inference module 1340, and a memory 1350. In other embodiments, alternative configurations, different or additional components may be included in the DNN system 1300. Further, functionality attributed to a component of the DNN system 1300 may be accomplished by a different component included in the DNN system 1300 or a different system. The DNN system 1300 or a component of the DNN system 1300 (e.g., the training module 1320 or inference module 1340) may include the computing device 1400.

The interface module 1310 facilitates communications of the DNN system 1300 with other systems. For example, the interface module 1310 establishes communications between the DNN system 1300 with an external database to receive data that can be used to train DNNs or input into DNNs to perform tasks. As another example, the interface module 1310 supports the DNN system 1300 to distribute DNNs to other systems, e.g., computing devices configured to apply DNNs to perform tasks.

The training module 1320 trains DNNs by using a training dataset. The training module 1320 forms the training dataset. In an embodiment where the training module 1320 trains an DNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a validation subset used by the validation module 1330 to validate performance of a trained DNN. The portion of the training dataset not including the tuning subset and the validation subset may be used to train the DNN.

The training module 1320 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 13, 130, 500, 1300, or even larger.

The training module 1320 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different category by training.

In the process of defining the architecture of the DNN, the training module 1320 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 1320 defines the architecture of the DNN, the training module 1320 inputs a training dataset into the DNN. The training dataset includes a plurality of training samples. An example of a training sample includes an object in an image and a ground-truth label of the object. The training module 1320 modifies the parameters inside the DNN ("internal parameters of the DNN") to minimize the error between labels of the training objects that are generated by the DNN and the ground-truth labels of the objects. The internal parameters include weights of filters in the convolutional layers of the DNN. In some embodiments, the training module 1320 uses a cost function to minimize the error.

The training module 1320 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 1320 finishes the predetermined number of epochs, the training module 1320 may stop updating the parameters in the DNN. The DNN having the updated parameters is referred to as a trained DNN.

The validation module 1330 verifies accuracy of trained DNNs. In some embodiments, the validation module 1330 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 1330 determines may determine an accuracy score measuring the precision, recall, or a combination of precision and recall of the DNN. The validation module 1330 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 1330 may compare the accuracy score with a threshold score. In an example where the validation module 1330 determines that the accuracy score of the augmented model is lower than the threshold score, the validation module 1330 instructs the training module 1320 to re-train the DNN. In one embodiment, the training module 1320 may iteratively re-train the DNN until the occurrence of a stopping condition, such as the accuracy measurement indication that the DNN may be sufficiently accurate, or a number of training rounds having taken place.

The inference module 1340 applies the trained or validated DNN to perform tasks. For instance, the inference module 1340 inputs images into the DNN. The DNN outputs classifications of objects in the images. As an example, the DNN may be provisioned in a security setting to detect malicious or hazardous objects in images captured by security cameras. As another example, the DNN may be provisioned to detect objects (e.g., road signs, hazards, humans, pets, etc.) in images captured by cameras of an autonomous vehicle. The input to the DNN may be formatted according to a predefined input structure mirroring the way that the training dataset was provided to the DNN. The DNN may generate an output structure which may be, for example, a classification of the image, a listing of detected objects, a boundary of detected objects, or the like. In some embodiments, the inference module 1340 distributes the DNN to other systems, e.g., computing devices in communication with the DNN system 1300, for the other systems to apply the DNN to perform the tasks.

The memory 1350 stores data received, generated, used, or otherwise associated with the DNN system 1300. For example, the memory 1350 stores the datasets used by the training module 1320 and validation module 1330. The memory 1350 may also store data generated by the training module 1320 and validation module 1330, such as the hyperparameters for training DNNs, internal parameters of trained DNNs (e.g., values of tunable parameters of FALUs), etc. In the embodiment of FIG. 13, the memory 1350 is a component of the DNN system 1300. In other embodiments, the memory 1350 may be external to the DNN system 1300 and communicate with the DNN system 1300 through a network.

### Example Computing Device

FIG. 14 is a block diagram of an example computing device 1400, in accordance with various embodiments. In some embodiments, the computing device 1400 can be used as the DNN system 1300 in FIG. 13. A number of components are illustrated in FIG. 14 as included in the computing device 1400, but any one or more of these components may be omitted or duplicated, as suitable for the application. In some embodiments, some or all of the components included in the computing device 1400 may be attached to one or more motherboards. In some embodiments, some or all of these components are fabricated onto a single system on a chip (SoC) die. Additionally, in various embodiments, the computing device 1400 may not include one or more of the components illustrated in FIG. 14, but the computing device 1400 may include interface circuitry for coupling to the one or more components. For example, the computing device 1400 may not include a display device 1406, but may include display device interface circuitry (e.g., a connector and driver circuitry) to which a display device 1406 may be coupled. In another set of examples, the computing device 1400 may not include an audio input device 1418 or an audio output device 1408, but may include audio input or output device interface circuitry (e.g., connectors and supporting circuitry) to which an audio input device 1418 or audio output device 1408 may be coupled.

The computing device 1400 may include a processing device 1402 (e.g., one or more processing devices). The processing device 1402 processes electronic data from registers and/or memory to transform that electronic data into other electronic data that may be stored in registers and/or memory. The computing device 1400 may include a memory 1404, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1404 may include memory that shares a die with the processing device 1402. In some embodiments, the memory 1404 includes one or more non-transitory computer-readable media storing instructions executable to perform operations for deep learning, e.g., the method 1100 described above in conjunction with FIG. 11 or some operations performed by the DNN accelerator 200 described above in conjunction with FIG. 2 (e.g., operations performed by the workload manager 220). The instructions stored in the one or more non-transitory computer-readable media may be executed by the processing device 2402.

In some embodiments, the computing device 1400 may include a communication chip 1412 (e.g., one or more communication chips). For example, the communication chip 1412 may be configured for managing wireless communications for the transfer of data to and from the computing device 1400. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1412 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1412 may operate in accordance with CDMA, Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1412 may operate in accordance with other wireless protocols in other embodiments. The computing device 1400 may include an antenna 1422 to facilitate wireless communications and/or to receive other wireless communications (such as AM or FM radio transmissions).

In some embodiments, the communication chip 1412 may manage wired communications, such as electrical, optical, or any other suitable communication protocols (e.g., the Ethernet). As noted above, the communication chip 1412 may include multiple communication chips. For instance, a first communication chip 1412 may be dedicated to shorter-range wireless communications such as Wi-Fi or Bluetooth, and a second communication chip 1412 may be dedicated to longer-range wireless communications such as global positioning system (GPS), EDGE, GPRS, CDMA, WiMAX, LTE, EV-DO, or others. In some embodiments, a first communication chip 1412 may be dedicated to wireless communications, and a second communication chip 1412 may be dedicated to wired communications.

The computing device 1400 may include battery/power circuitry 1414. The battery/power circuitry 1414 may include one or more energy storage devices (e.g., batteries or capacitors) and/or circuitry for coupling components of the computing device 1400 to an energy source separate from the computing device 1400 (e.g., AC line power).

The computing device 1400 may include a display device 1406 (or corresponding interface circuitry, as discussed above). The display device 1406 may include any visual indicators, such as a heads-up display, a computer monitor, a projector, a touchscreen display, a liquid crystal display (LCD), a light-emitting diode display, or a flat panel display, for example.

The computing device 1400 may include an audio output device 1408 (or corresponding interface circuitry, as discussed above). The audio output device 1408 may include any device that generates an audible indicator, such as speakers, headsets, or earbuds, for example.

The computing device 1400 may include an audio input device 1418 (or corresponding interface circuitry, as discussed above). The audio input device 1418 may include any device that generates a signal representative of a sound, such as microphones, microphone arrays, or digital instruments (e.g., instruments having a musical instrument digital interface (MIDI) output).

The computing device 1400 may include a GPS device 1416 (or corresponding interface circuitry, as discussed above). The GPS device 1416 may be in communication with a satellite-based system and may receive a location of the computing device 1400, as known in the art.

The computing device 1400 may include an other output device 1410 (or corresponding interface circuitry, as discussed above). Examples of the other output device 1410 may include an audio codec, a video codec, a printer, a wired or wireless transmitter for providing information to other devices, or an additional storage device.

The computing device 1400 may include an other input device 1420 (or corresponding interface circuitry, as discussed above). Examples of the other input device 1420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (register filelD) reader.

The computing device 1400 may have any desired form factor, such as a handheld or mobile computer system (e.g., a cell phone, a smart phone, a mobile internet device, a music player, a tablet computer, a laptop computer, a netbook computer, an ultrabook computer, a PDA, an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1400 may be any other electronic device that processes data.

### Select Examples

The following paragraphs provide various examples of the embodiments disclosed herein.

Example 1 provides a method of deep learning, the method including identifying a tile set for executing tensor operations in a DNN, the tile set including a plurality of PE arrays having different sizes, each PE array including PEs arranged in a first number of columns and a second number of rows and having a size determined by the first number and the second number; selecting a PE array from the plurality of PE arrays for a convolutional layer in the DNN; determining dimensions of an output tensor of the convolutional layer, the output tensor being a result of a convolutional operation to be performed by the PE array on an input tensor and a filter; partitioning the output tensor into output tensor segments based on a size of the PE array; and assigning workloads of generating the output tensor segments to a group of PEs in the PE array, where each PE in the group is to receive a workload of generating a respective output tensor segment and to perform a multiply-accumulation (MAC) operation for generating the respective output tensor segment.

Example 2 provides the method of example 1, where identifying the tile set for executing the tensor operations in the DNN includes determining dimensions of output tensors of a plurality of convolutional layers in the DNN; identifying a set of dimensions from the dimensions of the output tensors, wherein the set of dimensions are dimensions of output tensors of multiple convolutional layers of the plurality of convolutional layers; and identifying the tile set from a plurality of tile sets based on the set of dimensions, where each of the plurality of tile sets is a combination of different PE arrays.

Example 3 provides the method of example 2, where identifying the tile set for executing the tensor operations in the DNN further includes identifying the plurality of convolutional layers from all convolutional layers in the DNN, where dimensions of the plurality of convolutional layers are within one or more predetermined dimension ranges.

Example 4 The method of any of the preceding examples, where selecting the PE array from the plurality of PE arrays for the convolutional layer in the DNN includes selecting a group of PE arrays from the plurality of PE arrays for the convolutional layer in the DNN, where the group of PE arrays includes the PE array.

Example 5 provides the method of any of the preceding examples, where determining dimensions of the output tensor of the convolutional layer includes determining the dimensions of the output tensor based on dimensions of the input tensor, a number of kernels in the filter, and dimensions of the kernels.

Example 6 provides the method of any of the preceding examples, where the output tensor includes a set of output channels, each output channel including a matrix, and the dimensions of the output tensor include a first dimension indicating a number of elements in a row in the matrix, a second dimension indicating a number of elements in a column in the matrix, and a third dimension indicating a number of output channels in the set of output channels.

Example 7 provides the method of example 6, where partitioning the output tensor into output tensor segments based on a size of the PE array includes determining a fourth dimension and a fifth dimension of each output tensor segment based on the first number; and determining a sixth dimension based on the second number, where the fourth dimension indicates a number of elements in a row in the matrix, the fifth dimension indicates a number of elements in a column in the matrix, and the sixth dimension indicates a number of output channels in the set of output channels.

Example 8 provides the method of any of the preceding examples, where assigning the workloads of generate the output tensor segments to the group of PEs in the PE array includes for a workload of generating an output tensor segment, identifying a segment of the input tensor and a segment of the filter; and transmitting the segment of the input tensor and the segment of the filter into a PE in the group, where the PE is to perform one or more MAC operations on the segment of the input tensor and the segment of the filter and to output the output tensor segment.

Example 9 provides the method of example 8, where the PE includes an input register file for storing the segment of the input tensor; a weight register file for storing the segment of the filter; an output register file for storing the output tensor segment; and a MAC unit for performing the one or more MAC operations.

Example 10 provides the method of example 8 or 9, where the input tensor includes one or more integer values or one or more floating-point values.

Example 11 provides one or more non-transitory computer-readable media storing instructions executable to perform operations for deep learning, the operations including identifying a tile set for executing tensor operations in a DNN, the tile set including a plurality of PE arrays having different sizes, each PE array including PEs arranged in a first number of columns and a second number of rows and having a size determined by the first number and the second number; selecting a PE array from the plurality of PE arrays for a convolutional layer in the DNN; determining dimensions of an output tensor of the convolutional layer, the output tensor being a result of a convolutional operation to be performed by the PE array on an input tensor and a filter; partitioning the output tensor into output tensor segments based on a size of the PE array; and assigning workloads of generating the output tensor segments to a group of PEs in the PE array, where each PE in the group is to receive a workload of generating a respective output tensor segment and to perform a multiply-accumulation (MAC) operation for generating the respective output tensor segment.

Example 12 provides the one or more non-transitory computer-readable media of example 11, where identifying the tile set for executing the tensor operations in the DNN includes determining dimensions of output tensors of a plurality of convolutional layers in the DNN; identifying a set of dimensions from the dimensions of the output tensors, wherein the set of dimensions are dimensions of output tensors of multiple convolutional layers of the plurality of convolutional layers; and identifying the tile set from a plurality of tile sets based on the set of dimensions, where each of the plurality of tile sets is a combination of different PE arrays.

Example 13 provides the one or more non-transitory computer-readable media of example 12, where identifying the tile set for executing the tensor operations in the DNN further includes identifying the plurality of convolutional layers from all convolutional layers in the DNN, where dimensions of the plurality of convolutional layers are within one or more predetermined dimension ranges.

Example 14 provides the one or more non-transitory computer-readable media of any one of examples 11-13, where selecting the PE array from the plurality of PE arrays for the convolutional layer in the DNN includes selecting a group of PE arrays from the plurality of PE arrays for the convolutional layer in the DNN, where the group of PE arrays includes the PE array.

Example 15 provides the one or more non-transitory computer-readable media of any one of examples 11-14, where determining dimensions of the output tensor of the convolutional layer includes determining the dimensions of the output tensor based on dimensions of the input tensor, a number of kernels in the filter, and dimensions of the kernels.

Example 16 provides the one or more non-transitory computer-readable media of any one of examples 11-15, where the output tensor includes a set of output channels, each output channel including a matrix, and the dimensions of the output tensor include a first dimension indicating a number of elements in a row in the matrix, a second dimension indicating a number of elements in a column in the matrix, and a third dimension indicating a number of output channels in the set of output channels.

Example 17 provides the one or more non-transitory computer-readable media of example 16, where partitioning the output tensor into output tensor segments based on a size of the PE array includes determining a fourth dimension and a fifth dimension of each output tensor segment based on the first number; and determining a sixth dimension based on the second number, where the fourth dimension indicates a number of elements in a row in the matrix, the fifth dimension indicates a number of elements in a column in the matrix, and the sixth dimension indicates a number of output channels in the set of output channels.

Example 18 provides the one or more non-transitory computer-readable media of any one of examples 11-17, where assigning the workloads of generate the output tensor segments to the group of PEs in the PE array includes for a workload of generating an output tensor segment, identifying a segment of the input tensor and a segment of the filter; and transmitting the segment of the input tensor and the segment of the filter into a PE in the group, where the PE is to perform one or more MAC operations on the segment of the input tensor and the segment of the filter and to output the output tensor segment.

Example 19 provides the one or more non-transitory computer-readable media of example 18, where the PE includes an input register file for storing the segment of the input tensor; a weight register file for storing the segment of the filter; an output register file for storing the output tensor segment; and a MAC unit for performing the one or more MAC operations.

Example 20 provides the one or more non-transitory computer-readable media of any one of examples 11-19, where the input tensor includes one or more integer values or one or more floating-point values.

Example 21 provides a DNN accelerator, the DNN accelerator including a tile set including a plurality of PE arrays having different sizes, each PE array including PEs arranged in a first number of columns and a second number of rows and having a size determined by the first number and the second number; a workload manager configured to manage workloads of the tile set by: selecting a PE array from the plurality of PE arrays for a convolutional layer in the DNN, determining dimensions of an output tensor of the convolutional layer, the output tensor being a result of a convolutional operation to be performed by the PE array on an input tensor and a filter, partitioning the output tensor into output tensor segments based on a size of the PE array, and assigning workloads of generating the output tensor segments to a group of PEs in the PE array, where each PE in the group is to receive a workload of generating a respective output tensor segment and to perform a multiply-accumulation (MAC) operation for generating the respective output tensor segment; and a memory configured to store the input tensor, the filter, and the output tensor.

Example 22 provides the DNN accelerator of example 21, where the DNN accelerators further includes a plurality of tile sets that includes the tile set, and each of the plurality of tile sets is a combination of different PE arrays.

Example 23 provides the DNN accelerator of example 21 or 22, where the DNN includes a plurality of convolutional layers, and the tile set is selected from the plurality of tile sets based on one or more of the plurality of convolutional layers.

Example 24 provides the DNN accelerator of any one of examples 21-23, where the output tensor includes a set of output channels, each output channel including a matrix, and the dimensions of the output tensor include a first dimension indicating a number of elements in a row in the matrix, a second dimension indicating a number of elements in a column in the matrix, and a third dimension indicating a number of output channels in the set of output channels.

Example 25 provides the DNN accelerator of any one of examples 21-24, where the PE includes an input register file for storing a segment of the input tensor; a weight register file for storing a segment of the filter; an output register file for storing the output tensor segment; and a MAC unit for performing the MAC operation on the segment of the input tensor and the segment of the filter to generate the output tensor segment.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A method of deep learning, the method comprising:
identifying a tile set for executing tensor operations in a deep neural network (DNN), the tile set comprising a plurality of processing element (PE) arrays having different sizes, each PE array comprising PEs arranged in a first number of columns and a second number of rows and having a size determined by the first number and the second number;
selecting a PE array from the plurality of PE arrays for a convolutional layer in the DNN;
determining dimensions of an output tensor of the convolutional layer, the output tensor being a result of a convolutional operation to be performed by the PE array on an input tensor and a filter;
partitioning the output tensor into output tensor segments based on a size of the PE array; and
assigning workloads of generating the output tensor segments to a group of PEs in the PE array, wherein each PE in the group is to receive a workload of generating a respective output tensor segment and to perform a multiply-accumulation (MAC) operation for generating the respective output tensor segment.

2. The method of claim 1, wherein identifying the tile set for executing the tensor operations in the DNN comprises:
determining dimensions of output tensors of a plurality of convolutional layers in the DNN;
identifying a set of dimensions from the dimensions of the output tensors, wherein the set of dimensions are dimensions of output tensors of multiple convolutional layers of the plurality of convolutional layers; and
identifying the tile set from a plurality of tile sets based on the set of dimensions, wherein each of the plurality of tile sets is a combination of different PE arrays.

3. The method of claim 2, wherein identifying the tile set for executing the tensor operations in the DNN further comprises:
identifying the plurality of convolutional layers from all convolutional layers in the DNN, wherein dimensions of the plurality of convolutional layers are within one or more predetermined dimension ranges.

4. The method of any of the preceding claims, wherein selecting the PE array from the plurality of PE arrays for the convolutional layer in the DNN comprises:
selecting a group of PE arrays from the plurality of PE arrays for the convolutional layer in the DNN, wherein the group of PE arrays comprises the PE array.

5. The method of any of the preceding claims, wherein determining dimensions of the output tensor of the convolutional layer comprises:
determining the dimensions of the output tensor based on dimensions of the input tensor, a number of kernels in the filter, and dimensions of the kernels.

6. The method of any of the preceding claims, wherein:
the output tensor comprises a set of output channels,
each output channel comprising a matrix, and
the dimensions of the output tensor comprise a first dimension indicating a number of elements in a row in the matrix, a second dimension indicating a number of elements in a column in the matrix, and a third dimension indicating a number of output channels in the set of output channels.

7. The method of claim 6, wherein partitioning the output tensor into output tensor segments based on a size of the PE array comprises:
determining a fourth dimension and a fifth dimension of each output tensor segment based on the first number; and
determining a sixth dimension based on the second number,
wherein the fourth dimension indicates a number of elements in a row in the matrix, the fifth dimension indicates a number of elements in a column in the matrix, and the sixth dimension indicates a number of output channels in the set of output channels.

8. The method of any of the preceding claims, wherein assigning the workloads of generate the output tensor segments to the group of PEs in the PE array comprises:
for a workload of generating an output tensor segment, identifying a segment of the input tensor and a segment of the filter; and
transmitting the segment of the input tensor and the segment of the filter into a PE in the group, wherein the PE is to perform one or more MAC operations on the segment of the input tensor and the segment of the filter and to output the output tensor segment.

9. The method of claim 8, wherein the PE comprises:
an input register file for storing the segment of the input tensor;
a weight register file for storing the segment of the filter;
an output register file for storing the output tensor segment; and
a MAC unit for performing the one or more MAC operations.

10. The method of claim 8 or 9, wherein the input tensor comprises one or more integer values or one or more floating-point values.

11. One or more non-transitory computer-readable media storing instructions executable to perform the method of any of the preceding claims.

12. A deep neural network (DNN) accelerator, the DNN accelerator comprising:
a tile set comprising a plurality of processing element (PE) arrays having different sizes, each PE array comprising PEs arranged in a first number of columns and a second number of rows and having a size determined by the first number and the second number;
a workload manager configured to manage workloads of the tile set by:
selecting a PE array from the plurality of PE arrays for a convolutional layer in the DNN,
determining dimensions of an output tensor of the convolutional layer, the output tensor being a result of a convolutional operation to be performed by the PE array on an input tensor and a filter,
partitioning the output tensor into output tensor segments based on a size of the PE array, and
assigning workloads of generating the output tensor segments to a group of PEs in the PE array, wherein each PE in the group is to receive a workload of generating a respective output tensor segment and to perform a multiply-accumulation (MAC) operation for generating the respective output tensor segment; and
a memory configured to store the input tensor, the filter, and the output tensor.

13. The DNN accelerator of claim 12, wherein:
the DNN accelerators further comprises a plurality of tile sets that includes the tile set, and each of the plurality of tile sets is a combination of different PE arrays; or
the DNN comprises a plurality of convolutional layers, and the tile set is selected from the plurality of tile sets based on one or more of the plurality of convolutional layers.

14. The DNN accelerator of claim 12 or 13, wherein:
the output tensor comprises a set of output channels,
each output channel comprising a matrix, and
the dimensions of the output tensor comprise a first dimension indicating a number of elements in a row in the matrix, a second dimension indicating a number of elements in a column in the matrix, and a third dimension indicating a number of output channels in the set of output channels.

15. The DNN accelerator of any one of claims 12-14, wherein the PE comprises:
an input register file for storing a segment of the input tensor;
a weight register file for storing a segment of the filter;
an output register file for storing the output tensor segment; and
a MAC unit for performing the MAC operation on the segment of the input tensor and the segment of the filter to generate the output tensor segment.
